# EUROPÄISCHE PATENTANMELDUNG

(11) **EP 1 118 935 A2**
(43) Veröffentlichungstag der Anmeldung: **25.07.2001**
(21) Anmeldenummer: 00128045.2
(22) Anmeldetag: 21.12.2000
(51) Int. Cl.: G06F 11/14

(54) **Schaltungsanordnung und Verfahren zur Erzeugung und zum Auslesen von Ersatzdaten**

(30) Priorität: 30.12.1999 DE 19964003
(71) Anmelder: Micronas GmbH, 79108 Freiburg (DE)
(72) Erfinder: Koschelle, Dietmar, 79211 Denzlingen (DE); Franke, Jörg, 79117 Freiburg (DE)
(74) Vertreter: Patentanwälte Westphal, Mussgnug & Partner

(57) **Zusammenfassung**

Die Erfindung betrifft eine Schaltungsanordnung und ein Verfahren zur Erzeugung und zum Auslesen von Ersatzdaten. Die Schaltungsanordnung weist einen programmierten ROM-Speicher, der über einen Adress- und Datenbus mit einem Patch-Speichermodul gekoppelt ist, auf. Das Patch-Speichermodul weist eine Vielzahl von Patch-Datenregister und Patch-Adressregister in denen die Adressen und Ersatzdaten abgelegt sind auf. Die Erfindung erlaubt es, dass ein festverdrahteter und somit irreversibel programmierter ROM-Speicher durch eine externe Schaltungsanordnung modifizierbar bzw. korrigierbar ist. Mittels des erfindungsgemäßen Patch-Speichermoduls lassen sich z. B. fehlerhafte Befehle oder Programmsequenzen und Daten während eines ROM-Zugriffs der programmgesteuerten Einheit durch Fehlerkorrekturbefehle ersetzen. Durch die Verwendung von dedizierten Registern kann für die Fehlerkorrektur weitestgehend auf den RAM-Speicher bei Beibehaltung der Auslesegeschwindigkeit verzichtet werden.

## Beschreibung

Die Erfindung betrifft eine Schaltungsanordnung gemäß dem Oberbegriff des Patentanspruchs 1 und ein Verfahren zum Betreiben dieser Schaltungsanordnung gemäß Patentanspruch 11, dass heißt eine Schaltungsanordnung und ein Verfahren zur Erzeugung und zum Auslesen von Ersatzdaten, mit einem programmierten ROM-Speicher, der an einen Adressund Datenbus gekoppelt ist und in dem zumindest teilweise zu ersetzende Daten gespeichert sind.

Die in Rede stehenden Schaltungsanordnungen sind zum Beispiel programmgesteuerte Einheiten, wie zum Beispiel Mikroprozessoren, Mikroprozessoren, Signalprozessoren und dergleichen; sie sind seit vielen Jahren in den unterschiedlichsten Ausführungsformen bekannt und bedürfen keiner weiteren Erläuterung. Die programmgesteuerten Einheiten sind in der Regel dazu ausgelegt, bereits von Beginn an (von deren Einschalten oder Rücksetzen an) Programme auszuführen. Die auszuführenden Programme, genauer gesagt die diese repräsentierenden Programmcodes, können dabei in einem in der programmgesteuerten Einheit vorgesehenen Programmspeicher abgelegt sein.

Als Programmspeicher werden häufig nicht-flüchtige ROM-Speicher (Read Only Memory) verwendet, die in Form eines externen Chips oder in integrierter Form in der programmgesteuerten Einheit eingesetzt werden. ROM-Speicher sind besonders gut für solche Anwendungen geeignet, bei denen die zu speichernden Programmcodes irreversibel programmiert werden und bei denen der Speicher eine sehr lange Datenhaltung (> 10 Jahre) aufweisen soll. Allerdings ergibt sich ein Problem, wenn es notwendig wird, einzelne im ROM-Speicher irreversibel gespeicherte Programmcodes bzw. Daten, beispielsweise bei einem durch die Programmierung hervorgerufenen Fehler oder bei einem notwendig gewordenen Update, nachträglich zu verändern.

Dieses Problem kann auf einfache Weise durch Ersetzen des defekten bzw. nicht mehr aktuellen ROM-Speichers durch einen neuen ROM-Speicher, der mit den richtigen bzw. aktualisierten Programmcodes programmiert ist, gelöst werden. Allerdings ist diese Lösung weder ökonomisch noch in den meisten Fällen praktikabel, da bei vielen programmgesteuerten Einheiten der ROM-Speicher in integrierter Form vorliegt und ein Austausch des ROM-Speichers den Austausch der gesamten programmgesteuerten Einheit zur Folge hätten.

Ein verbessertes Verfahren verwendet zur Modifizierung eines fehlerhaften Programmcodes (Patch) einen Sprungbefehl, der ausgeführt wird, wenn das Programm auf diesen fehlerhaften Programmcode an einer diesem zugeordneten vorbestimmten Adresse zugreift. Für jeden fehlerhaften Programmcode im ROM-Speicher wird dazu ein gewisser Speicherplatzanteil auf einem internen oder externen RAM-Speicher (Read Access Memory) bereitgestellt, der zur Aufnahme der dem Sprungbefehl zugehörigen Sprungbefehl-Folgebefehl (Interrupt Service Routine) vorgesehen ist. Während einer Systeminitialisierung werden die den fehlerhaften Programmcodes zugeordneten Adressen in ein dem jeweiligen Sprungbefehl zugeordnetes Register programmiert und die zugehörigen Spungbefehl-Folgebefehle in das System-RAM geladen. Derartige modifizierte bzw. korrigierte Sprungbefehl-Folgebefehle werden allgemein auch als Fehlerkorrekturbefehle oder als Patches, der zugehörige Speicher als Patch-Speicher, benannt. Die Daten für die Spungbefehl-Folgebefehle können beispielsweise aus einem System-EEPROM oder über eine externe Schnittstelle ins System-RAM geladen werden.

Auf diese Weise lassen sich zwar einzelne fehlerhaften Programmcodes korrigieren, jedoch ist hierfür ein erheblicher Speicheraufwand des System-RAMs erforderlich, der für weitere Aufgaben nicht mehr zur Verführung steht.

Zudem läßt sich eine Korrektur bzw. Manipulation eines fehlerhaften Programmcodes nicht direkt, sondern nur über den Umweg eines Sprungbefehls und des zugehörigen Folgebefehls herbeiführen. Insbesondere dann, wenn ein einzelnes fehlerhaftes Bytes in einer Programmtabelle, welches in sehr vielen Programmsequenzen verwendet wird, auftritt, muß eine Korrektur bzw. Manipulation all dieser Programmsequenzen erfolgen. Da hier jedesmal ein separater Interrupt erforderlich ist, für den entsprechend viel Speicherplatzbedarf auf dem System-RAM bereitgestellt werden muß, kann diese Maßnahme sehr schnell einen immensen Aufwand nach sich ziehen.

Schließlich erhöht sich die Ausführungszeit jedes fehlerhaften Programmcodes um die für den Interrupt benötigte Zeit. Besonders nachteilig wirkt sich dies bei Vorhandensein von solchen fehlerhaften Programmcodes aus, die bei der Ausführung eines Programms sehr häufig angesprochen werden und somit manipuliert werden müssen; dadurch wird die Leistungsfähigkeit des gesamten System erheblich reduziert.

Dies sind Nachteile, die es zu beseitigen gilt.

Der vorliegenden Erfindung liegt die Aufgabe zugrunde, eine Schaltungsanordnung und ein Verfahren zum Betreiben dieser Schaltungsanordnung anzugeben, die geeignet sind, auf einem System-ROM irreversibel gespeicherte und teilweise zu ersetzende Daten weitestgehend ohne Beeinträchtigung der Auslesegeschwindigkeit auszulesen.

Ferner sollte die Schaltungsanordnung möglichst einfach und kostengünstig realisierbar sein und das zugrunde liegende Verfahren sollte zuverlässig funktionieren.

Erfindungsgemäß wird die anordnungsbezogene Aufgabe durch eine Schaltungsanordnung mit den Merkmalen des Patentanspruchs 1 und die verfahrensbezogene Aufgabe durch ein Verfahren mit den Merkmalen des Patentanspruchs 11 gelöst.

Demgemäß ist vorgesehen,
- dass eine Schaltungsanordnung der eingangs genannten Gattung bereitgestellt wird, bei der ein mit dem Adress- und Datenbus gekoppeltes Patch-Speichermodul vorgesehen ist, welches zumindest ein Patch-Datenregister, in denen die für die zu ersetzenden Daten bestimmten Ersatzdaten abgelegt sind, und welches zumindest ein Patch-Adressregister aufweist, in denen die den Ersatzdaten zugeordneten Adressen abgelegt sind (kennzeichnender Teil des Patentanspruchs 1), bzw.
- dass ein Verfahren zum Betreiben der Schaltungsanordnung bereitgestellt wird, das einen Betriebsmodus aufweist,
   (a) bei dem über ein erstes Steuersignal (PMEN) alle Patch-Adressregister (8) des Patch-Speichermoduls (7) in den Patch-Modus (COMPARE) gesteuert werden,
   (b) bei dem über ein erstes Freigabesignal (PSELx) die gewünschten Patch-Adressregister (8) freigegeben werden,
   (c) bei dem die Vergleicherschaltung die aktuellen Adressen auf dem Adressbus (3) mit den in den jeweils freigegebenen Patch-Adressregistern (9) abgelegten Adressen vergleicht,
   (d) bei dem für den Fall mindestens einer Übereinstimmung einer dieser Adressen das dieser Adresse im ROM-Speicher (2) zugeordnete Datum durch ein Ersatzdatum aus dem jeweiligen Patch-Datenregister (10) ersetzt wird und
   (e) bei dem das Ersatzdatum auf den Datenbus (4) geschaltet wird (kennzeichnender Teil des Patentanspruchs 11).

Die Erfindung erlaubt es, dass ein festverdrahteter und somit irreversibel programmierter ROM-Speicher durch eine externe Schaltungsanordnung modifizierbar bzw. korrigierbar ist. Mittels des erfindungsgemäßen Patch-Speichermoduls bzw. des erfindungsgemäßen Verfahrens lassen sich fehlerhafte Befehle oder Programmsequenzen während eines ROM-Zugriffs einer programmgesteuerten Einheit durch Fehlerkorrekturbefehle ersetzen.

Der besondere Vorteil der Erfindung besteht darin, dass das Patch-Speichermodul nahezu ohne Zeitverlust betreibbar ist, das heißt, zu ersetzende Daten des Speichers werden zeitverlustfrei durch korrigierte Daten aus dem Patch-Speichermodul ersetzt. Dies erfolgt vorteilhafterweise wie folgt: ein im Speicher abgelegtes und zu ersetzendes Datum weist eine vorgegebene Adresse auf. Eine einem zu ersetzenden Datum zugehörige Adresse wird bei der vorliegenden Erfindung über den Daten/Adressbus sowohl (wie üblich) vom Speicher eingelesen als auch gleichzeitig von dem Patch-Speichermodul. Das Patch-Speichermodul, das ebenfalls an den Daten/Adressbus angekoppelt ist, vergleicht die über den Daten/Adressbus an den Speicher weitergeleitete Adressen mit einen vorgegebenen Adressmuster. Stimmt das Adressmuster im Patch-Speichermodul mit derjenigen Adresse überein, die einem fehlerhaften oder zu ersetzenden Datum zugeordnet ist, so wird über einen Patch-Datenspeicher das korrekte Datum ausgelesen und dem Datenbus zugeführt. Hierzu ist eine Vergleichervorrichtung vorgesehen, die das korrekte, fehlerfreie Datum gegenüber dem fehlerbehafteten bzw. zu ersetzenden Datum aus dem Speicher vorzieht und das korrekte Datum auf den Datenbus legt. Das zu ersetzende Datum bzw. das fehlerhafte Datum gelangt somit erst gar nicht auf den Datenbus. Der Datenfluss wird selbst bei einem sehr häufig vorkommenden Datenersatz nicht beeinträchtigt und auch nicht verlangsamt, da zeitaufwendige Sprungbefehle, Interrupts und dergleichen hier nicht erforderlich sind.

Vorteilhafterweise ist die Schaltungsanordnung als integrierte Schaltung vorgesehen, d.h. sowohl der Speicher als auch das Patch-Speichermodul sind in einem Halbleiterchip integriert. Der Adress-/Datenbus ist als interner Bus vorgesehen. Der Zugriff des Patch-Speichermoduls auf den intern ausgebildeten Adress-/Datenbus erfolgt damit sehr schnell und vorteilhafterweise voll synchron zu dem Zugriff auf den Speicher. Eine Ankopplung über eine externe Interface-Schnittstelle (I/O-Port), über die bekannte Patch-Speichermodule typischerweise an den internen Patch-Speicher angekoppelt sind, ist hier nicht vorgesehen. Die damit einhergehende Nachteile eines Zeitverlustes aufgrund der Synchronisation und Datenübergabe zwischen internen Adress-/Datenbusses und externen Adress-/Datenbusses ist hier nicht erforderlich.

Durch die Verwendung von dezidierten Registern - den Patch-Adressregistern, den Patch-Datenregistern und dem Patch-Freigaberegister - kann für die Fehlerkorrektur weitestgehend auf den RAM-Speicher verzichtet werden. Lediglich bei einer Fehlerkorrektur von größeren Programmsequenzen, die größer als die Anzahl der implementierten Patch-Datenspeicher sind, ist es sinnvoll in den RAM-Speicher abzuzweigen. Dies kann beispielsweise mittels eines Sprungbefehls, der zu einer neuen verbesserten Programmsequenz im RAM abzweigt, realisiert werden. Dadurch lassen sich selbst sehr komplexe Software- oder Programmodule einfügen oder ersetzen.

Der besondere Vorteil bei der Verwendung von als Register ausgebildeten Patch-Datenspeichern und Patch-Adressspeichern besteht in dem verzögerungsfreien Zugriff. Bei bekannten Patch-Speichermodulen sind die zu ersetzenden bzw. korrigierten Daten typischerweise in einen RAM-, ROM- oder Festwertspeicher abgelegt. Um die zu ersetzenden Daten mit den fehlerfreien aus dem Patch-Datenspeicher zu ersetzen ist hier immer ein Zugriff auf den Patch-Datenspeicher erforderlich, was zu einer signifikanten Reduzierung der Datenauslesegeschwindigkeit, insbesondere bei Vorliegen von sehr häufig vorkommenden zu ersetzenden Daten, zur Folge hat. Demgegenüber wird durch Ausbildung des Patch-Datenspeichers und Patch-Adressspeichers als fest verdrahteter Logikschaltung bzw. als Register das Auslesen und Ersetzen der Daten nahezu verzögerungsfrei gewährleistet. In jedem Fall erfolgt der Datenzugriff auf diese Speicherregister sehr viel schneller als bei den bekannten RAM-, ROM- oder Festwertspeicher.

Besonders vorteilhaft ist es, dass durch die vorliegende Erfindung nicht nur Befehle, sondern auch einzelne Daten ersetzt werden können. Die Änderung eines einzelnen Bytes in einer Tabelle, das in mehreren Programmsequenzen gleichzeitig Verwendung findet, erfolgt lediglich durch Änderung dieses einen Bytes.

In dem nachstehenden Ausführungsbeispiel wird die Erfindung speziell anhand eines als Programmspeicher ausgebildeten ROM-Speichers beschrieben. Selbstverständlich eignet sich die erfindungsgemäße Schaltungsanordnung für jegliche wie auch immer ausgebildete ROM-Speicher, bei denen es darum geht, einmal irreversibel programmierte, fehlerhafte Daten durch Fehlerkorrekturdaten (Patches) zu ersetzen. Der Speicher kann somit allgemein auch als ROM-Datenspeicher ausgebildet sein. Ferner ist die Erfindung auch sehr vorteilhaft bei als PROM und/oder als EPROM ausgebildeten nicht-flüchtigen Speichern anwendbar.

Die Erfindung ist auch nicht notwendigerweise auf das Ersetzen von fehlerhaften Daten oder Befehlen beschränkt. Durch das erfindungsgemäße Patch-Speichermodul können auch korrekte, jedoch nicht mehr aktuelle Befehle durch Update-Befehle (Patches) ersetzt werden, was insbesondere in ökonomischer Hinsicht von Vorteil ist, da nicht mehr aktuelle ROM-Speicher nicht notwendigerweise ersetzt werden müssen.

Die Erfindung eignet sich insbesondere bei als Mikrocontroller, Mikroprozessor, Signalprozessor, etc. ausgebildeten programmgesteuerten Einheiten, die einen auf dem Chip der programmgesteuerten Einheiten mitintegrierten System-ROM aufweisen. Durch die vorliegende Erfindung muß bei Vorhandensein eines fehlerhaften ROM-Befehls nicht die gesamte programmgesteuerte Einheit ersetzt werden. Lediglich der fehlerhafte ROM-Befehl wird durch einen Fehlerkorrekturbefehl im Patch-Speichermodul ersetzt. Darüber hinaus kann die Erfindung selbstverständlich auch bei auf andere Weise ausgebildeten programmgesteuerten Einheiten, wie zum Beispiel getakteten Ablaufsteuerschaltungen und/oder Zustandsmaschinen (state machines) Verwendung finden.

Weitere Vorteilhafte Ausgestaltungen und Weiterbildungen der Erfindung sind den Unteransprüchen, der folgenden Beschreibung und den Figuren entnehmbar.

Die Erfindung wird nachfolgend anhand eines in den Figuren der Zeichnung angegebenen, vorteilhaften Ausführungsbeispiels näher erläutert. Es zeigt dabei:
- Figur 1: das Blockschaltbild einer erfindungsgemäßen, als Mikrocontroller ausgebildeten Schaltungsanordnung mit einem Patch-Speichermodul;
- Figur 2: das Blockschaltbild eines Patch-Speichermoduls für eine erfindungsgemäße Schaltungsanordnung gemäß Figur 1;
- Figur 3: ein Timing-Diagramm, das den zeitlichen Ablauf für das Erzeugen und Auslesen von Fehlerkorrekturbefehlen aus der erfindungsgemäßen Schaltungsanordnung veranschaulicht.

In allen Figuren der Zeichnung sind gleiche oder funktionsgleiche Elemente und Signale mit gleichen Bezugszeichen versehen.

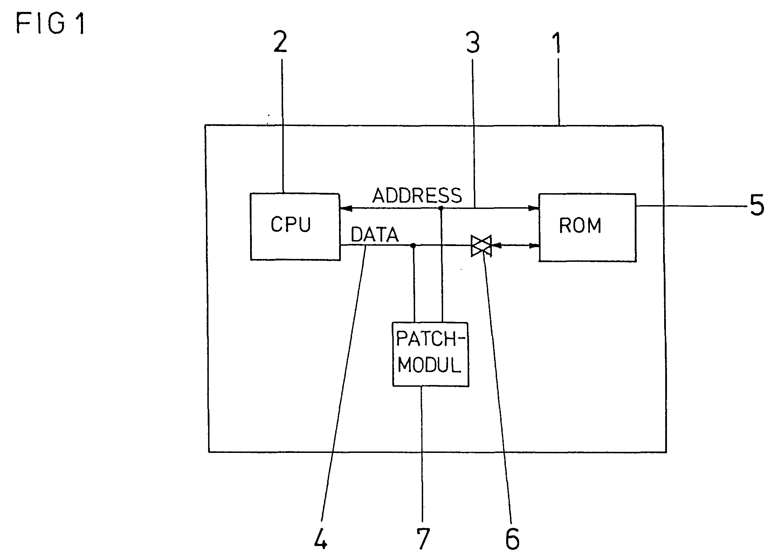

Figur 1 zeigt das Blockschaltbild einer erfindungsgemäßen, als programmgesteuerten Einheit ausgebildeten Schaltungsanordnung. Die programmgesteuerte Einheit 1, bei der lediglich die zur Beschreibung der Erfindung erforderlichen Einheiten dargestellt sind, ist als Mikrocontroller ausgebildet, dass heißt sämtliche in Figur 1 dargestellten Einheiten sind monolithisch auf einem einzigen Chip integriert.

Der Mikrocontroller 1 weist in bekannter Weise eine zentrale Recheneinheit (CPU) 2 auf, die über einen Adressbus 3 und Datenbus 4 mit dem als ROM-Speicher 5 ausgebildeten Systemspeicher gekoppelt ist. Zwischen zentraler Recheneinheit (CPU) 2 und ROM-Speicher 5 ist ein Transfergatter 6 auf den Datenbus 4 geschaltet. Ferner ist ein mit dem Adressbus 3 und Datenbus 4 verbundenes Patch-Speichermodul 7 vorgesehen.

Der Einfachheit halber ist in Figur 1 ein typischerweise in einer programmgesteuerten Einheit 1 vorgesehener Steuerbus, der sämtliche Bussteuerungen und Busarbitrierungen steuert, nicht dargestellt worden; ein solcher Steuerbus könnte separat oder auch durch einen Adressbus im Multiplexbetrieb realisiert sein.

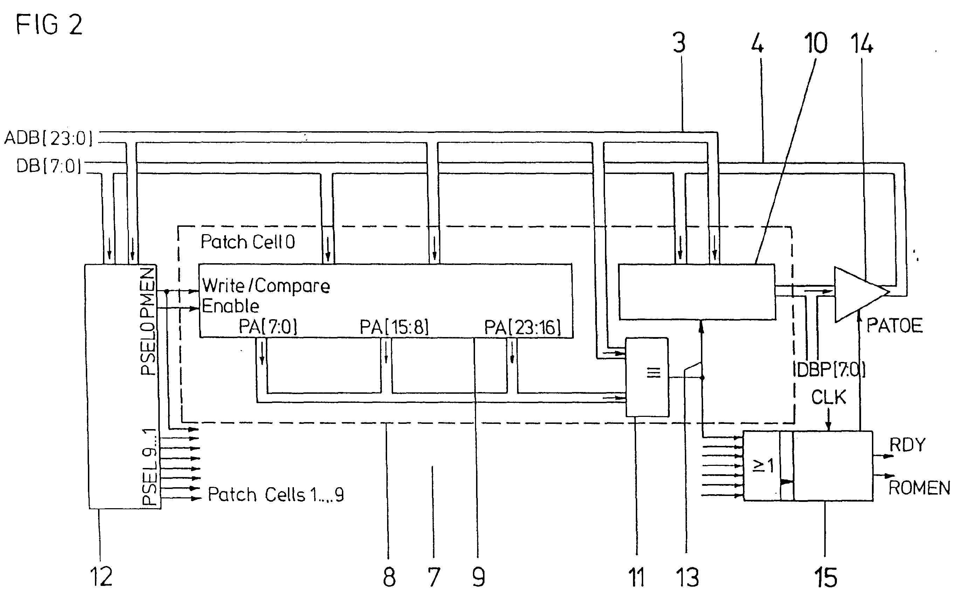

Nachfolgend wird das erfindungsgemäße Patch-Speichermodul anhand des Blockschaltbildes in Figur 2 näher beschrieben.

Das Patch-Speichermodul 7 in Figur 2 weist zehn verschiedene Patch-Speicherzellen 8 auf, wobei der besseren Übersichtlichkeit wegen in Figur 2 nur eine solche Patch-Speicherzelle 8 dargestellt ist. Jede Patch-Speicherzelle 8 weist ein Patch-Adressregister 9, ein dem Patch-Adressregister 9 nachgeschaltetes Patch-Datenregister 10 sowie eine zwischen diesen Registern 9, 10 angeordnete Vergleicherschaltung 11 auf. Das Patch-Speichermodul 7 weist ferner ein Patch-Freigaberegister 12 auf, welches alle Patch-Speicherzellen 8 ansteuert. Im vorliegenden Beispiel ist jede Patch-Speicherzelle 8 über ein Patchmodus-Steuersignal (PMEN) und ein Patch-Speicherzellen-Freigabesignal (PSEL) ansteuerbar.

Das Patch-Adressregister 9 ist eingangsseitig mit dem 24 Bit breiten Adressbus 3 (ADB[23:0]) verbunden und stellt ausgangsseitig drei 1 Byte breite Adressen bereit. Das Patch-Datenregister 10 ist eingangsseitig sowohl mit dem Adressbus 3 als auch mit dem 8 Bit breiten Datenbus 4 (DB[7:0]) verbunden. Die Vergleicherschaltung 11 ist eingangsseitig mit den Adressausgängen des Patch-Adressregisters 9 sowie des Adressbusses 3 verbunden. Ausgangsseitig steuert die Vergleicherschaltung 11 das Patch-Datenregister 10 mit einem Datenregister-Freigabesignal 13 an. Der Ausgang des Patch-Datenregister 10 kann direkt oder über eine Datenbustreiberschaltung 14 mit dem Datenbus 4 verbunden sein.

Im vorliegenden Ausführungsbeispiel ist die Datenbustreiberschaltung 14 vorteilhafterweise als bekannte Open-Drain-Treiberschaltung 14 ausgebildet. Diese Open-Drain-Treiberschaltung 14 wird durch eine Ablaufsteuereinheit 15 angesteuert. Die Ablaufsteuereinheit 15 steuert über ein Steuersignal PATOE die Datenbusarbitrierung und stellt sicher, dass maximal ein Patch-Datenregister 10 zugriffsberechtigt ist und somit Daten auf den Datenbus 4 schreiben kann.

Im vorliegenden Ausführungsbeispiel ist jeweils eine Vergleicherschaltung 11 für jede Patch-Speicherzelle 8 vorgesehen; besonders vorteilhaft ist es jedoch, wenn lediglich eine einzige Vergleicherschaltung 11 für alle Patch-Speicherzellen 8 bestimmt ist. Die Vergleicherschaltung 11 kann auf sehr einfache Weise durch einen einfachen Komparator 11 ausgebildet sein. Dieser Komparator 11 sollte zweckmäßigerweise, jedoch nicht notwendigerweise, dieselbe Adressbreite wie der Adressbus 3 aufweisen. In einer vorteilhaften Ausgestaltung wäre es jedoch auch denkbar, wenn der Komparator 11 dazu ausgelegt ist, die Adressen des Adressbusses 3 bzw. des Patch-Adressregister 9 byteweise zu verarbeiten.

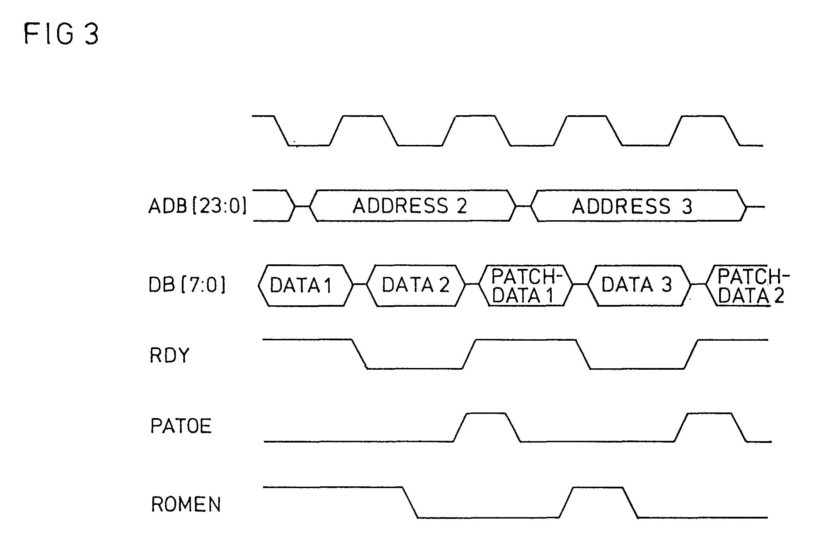

Nachfolgend wird die Betriebsweise des erfindungsgemäßen Patch-Speichermoduls 7 anhand von Figur 3 näher erläutert. Figur 3 zeigt ein Timing-Diagramm, das den zeitlichen Ablauf beim Auslesen von Fehlerkorrekturbefehlen aus dem Patch-Speichermodul 7 veranschaulicht.

Man unterscheidet dabei grundsätzlich die folgenden drei Betriebsmodi:

### Systeminitialisierung:

Die Systeminitialisierung erfolgt zu Beginn oder bei einem erneuten Start (RESET) oder in einem speziellen Modem (Supervisor oder Service) der programmgesteuerten Einheit 1. Hier werden über das Patchmodus-Steuersignal PMEN alle Patch-Speicherzellen 8 in einen Schreibmodus (WRITE) gesteuert. Zur Initialisierung einer Patch-Speicherzelle 8 wird über ein Patch-Speicherzellen-Freigabesignal PSELx das entsprechende Patch-Adressregister 9 freigegeben. Sodann kann eine einzelne 24-Bit breite Adresse in das Patch-Adressregister 9 geschrieben werden und der dieser Adresse zugeordnete Fehlerkorrekturbefehl (Patch) im Patch-Datenregister 10 abgelegt werden. Dieser Vorgang kann auch für die übrigen bzw. einzelne Patch-Speicherzellen 8 wiederholt werden, wobei die jeweils zu beschreibenden Patch-Speicherzellen 8 auf einfache Weise durch einen (nicht dargestellten) Adresszeiger angesprochen werden können. Es wäre auch denkbar, dass das Schreiben der 24-Bit Adressen in die Patch-Adressregister 9 nacheinander byteweise (8-Bit), 4-bitweise, oder dergleichen erfolgt.

Die während der Systeminitialisierung in die Patch-Adressregister 9 und Patch-Datenregister 10 geschriebenen Adressen bzw. Daten (Fehlerkorrekturbefehle) können über einen internen Speicher oder über eine externe Schnittstelle aus einem externen Speicher geladen werden.

### Patch-Betriebsmodus:

Hier werden über das Patchmodus-Steuersignal PMEN z. B. alle Patch-Speicherzellen 8 in den Patch-Modus (COMPARE) gesteuert. Über das Patch-Speicherzellen-Freigabesignal PSELx wird die gewünschte Patch-Speicherzelle 8 des Patch-Speichermoduls 7 freigegeben. Die Vergleicherschaltung 11 beginnt sodann, die aktuellen Adressen (auf dem Adressbus 3) mit den in den jeweils freigegebenen Patch-Adressregistern 9 abgelegten Adressen zu vergleichen. Für den Fall einer Übereinstimmung einer Adresse des Adressbusses 3 und mit der eines freigegebenen Patch-Adressregisters 9 wird der dieser Adresse im ROM-Speicher zugeordnete Befehl durch den entsprechenden Fehlerkorrekturbefehl aus dem jeweiligen Patch-Datenregister 10 ersetzt und auf den Datenbus geschaltet.

Besonders vorteilhaft ist es in diesem Zusammenhang, wenn bei einer solchen Übereinstimmung der Adressen von der Ablaufsteuereinheit 15 zugleich ein Wartesignal RDY bereitgestellt wird. Die zentrale Recheneinheit 2 wird durch dieses Wartesignal RDY für die Dauer eines Taktzyklus CLK in einen Wartezustand versetzt, dass heißt die Datenverarbeitung der zentralen Recheneinheit wird durch diese sogenannten Wait-States verzögert. In der Zwischenzeit werden die ROM-Datenbusausgangstreiber über ein weiteres Steuersignal ROMEN deaktiviert und an deren statt wird der Fehlerkorrekturbefehl des jeweiligen Patch-Datenregisters 10 auf den Datenbus 4 geschaltet.

Für den Fall, dass verschiedene Patch-Adressregister 9 dieselbe Adresse jedoch unterschiedliche Fehlerkorrekturbefehle in den entsprechenden Patch-Datenregistern 10 aufweisen, kann ein Zugriffskonflikt auf dem Datenbus 4 durch die bereits bezeichnete Open-Drain-Struktur des Datenbusses 4 vermieden werden. Dies kann jedoch auch mittels einer geeignet ausgestalteten Ablaufsteuereinheit 15 erreicht werden.

Die oben genannten Wait-States können, müssen jedoch nicht notwendigerweise, auch bei der Adressdekodierung eingesetzt werden.

### Systemrekonfiguration:

Zunächst wird über das Patchmodus-Steuersignal PMEN das Patch-Speichermodul vom Patch-Modus in den Schreibmodus gesteuert. Die Systemrekonfiguration erfolgt dann äquivalent zur Systeminitialisierung.

## Patentansprüche

1. Schaltungsanordnung zur Erzeugung und zum Auslesen von Ersatzdaten, mit einem Speicher (5), der an einen Adress- und Datenbus (3, 4) gekoppelt ist und in dem zumindest teilweise zu ersetzende Daten gespeichert sind,
**dadurch gekennzeichnet**,
dass mindestens ein mit dem Adress- und Datenbus (3, 4) gekoppeltes Patch-Speichermodul (7) vorgesehen ist, welches zumindest einen Patch-Datenspeicher (10), in den die für die zu ersetzenden Daten bestimmten Ersatzdaten abgelegt sind, und welches zumindest einen Patch-Adressspeicher (9) aufweist, in den die den Ersatzdaten zugeordneten Adressen abgelegt sind.

2. Schaltungsanordnung nach Anspruch 1,
**dadurch gekennzeichnet**,
dass eine Vergleicherschaltung (11) vorgesehen ist, die einen Vergleich der Adressen von Patch-Adressspeicher (9) und Adressbus (3) vornimmt und die bei Übereinstimmung der jeweiligen Adressen veranlaßt, dass das Ersatzdatum auf den Datenbus (4) geschaltet wird.

3. Schaltungsanordnung nach Anspruch 2,
**dadurch gekennzeichnet**,
dass die Vergleicherschaltung (11) als Komparator (11) ausgebildet ist, der eingangsseitig zum einen mit dem Adressbus (3) und zum anderen mit den Adressausgängen des Patch-Adressspeicher (9) verbunden ist und der ausgangsseitig das dem jeweiligen Patch-Adressspeicher (9) zugeordnete Patch-Datenspeicher (10) ansteuert.

4. Schaltungsanordnung nach einem der vorstehenden Ansprüche,
**dadurch gekennzeichnet**,
dass das Patch-Speichermodul (7) eine Vielzahl von Patch-Adressregistern (9) und eine Vielzahl von Patch-Datenspeichern (10) sowie ein einziges Patch-Freigabespeicher (12) mit einer Vielzahl von Ausgängen zur Ansteuerung der Vielzahl von Patch-Adressspeicher (9) aufweist.

5. Schaltungsanordnung nach einem der vorstehenden Ansprüche,
**dadurch gekennzeichnet**,
dass mindestens eine den Patch-Datenspeichern (10) nachgeschaltete Datenbustreiberschaltung (14) und eine diese ansteuernde Ablaufsteuereinheit (15) vorgesehen sind, wobei mittels der Ablaufsteuereinheit (15) sichergestellt wird, dass maximal ein Patch-Datenregister (10) die Zugriffsberechtigung auf den Datenbus (4) erhält.

6. Schaltungsanordnung nach Anspruch 5,
**dadurch gekennzeichnet**,
dass die Datenbustreiberschaltung (14) als Open-Drain- oder als Precharge-Evaluate-Treiberschaltung (14) ausgebildet ist.

7. Schaltungsanordnung nach einem der vorstehenden Ansprüche,
**dadurch gekennzeichnet**,
dass das Patch-Speichermodul (7) eine Schnittstelle mit einem RAM-Speicher aufweist.

8. Schaltungsanordnung nach einem der vorstehenden Ansprüche,
**dadurch gekennzeichnet**,
dass die Schaltungsanordnung eine bzw. Bestandteil einer programmgesteuerten Einheit (1) ist.

9. Schaltungsanordnung nach einem der vorstehenden Ansprüche,
**dadurch gekennzeichnet**,
dass die Schaltungsanordnung ein Mikroprozessor oder ein Mikrocontroller (1) oder ein Signalprozessor ist.

10. Schaltungsanordnung nach einem der Ansprüche 1 bis 8,
**dadurch gekennzeichnet**,
dass die Schaltungsanordnung als getaktete oder asynchrone Ablaufsteuerschaltung ausgebildet ist.

11. Verfahren zum Betreiben einer Schaltungsanordnung nach einem der vorstehenden Ansprüche,
**gekennzeichnet** durch einen Betriebsmodus,
(a) bei dem über ein erstes Steuersignal (PMEN) mindestens eines der Patch-Adressspeicher (9) des Patch-Speichermoduls (7) in den Patch-Modus (COMPARE) gesteuert werden,
(b) bei dem über ein erstes Freigabesignal (PSELx) die gewünschten Patch-Adressregister (9) freigegeben werden,
(c) bei dem die Vergleicherschaltung (11) die aktuellen Adressen auf dem Adressbus (3) mit den in den jeweils freigegebenen Patch-Adressspeicher (9) abgelegten Adressen vergleicht,
(d) bei dem für den Fall mindestens einer Übereinstimmung einer dieser Adressen das dieser Adresse im Speicher (5) zugeordnete Datum durch ein Ersatzdatum aus dem jeweiligen Patch-Datenspeicher (10) ersetzt wird und
(e) bei dem das Ersatzdatum auf den Datenbus (4) geschaltet wird.

12. Verfahren nach Anspruch 11,
**gekennzeichnet** durch einen Initialisierungsmodus,
(A) der jedesmal zu Beginn oder bei einem erneuten Start der programmgesteuerten Einheit (1) ausgeführt wird,
(B) bei dem über das erste Steuersignal (PMEN) alle Patch-Adressspeicher (9) in den Schreibmodus (WRITE) gesteuert werden,
(C) bei dem über ein erstes Freigabesignal (PSELx) eines der Patch-Adressspeicher (9) freigegeben wird,
(D) bei dem eine neue Adresse in das Patch-Adressspeicher (9) geschrieben wird,
(E) bei dem das dieser Adresse zugeordnete Ersatzdatum in dem diesem Patch-Adressspeicher (9) zugeordneten Patch-Datenregister (10) geschrieben wird und
(F) bei dem die Verfahrensschritte (C) bis (E), soweit erforderlich, für weitere Patch-Adressspeicher (9) mit zugehörendem Patch-Datenspeicher (10) des Patch-Speichermoduls (7) wiederholt werden.

13. Verfahren nach einem der Ansprüche 11 oder 12,
**gekennzeichnet** durch einen Systemrekonfigurationsmodus,
der jedesmal bei einer erforderlichen Systemrekonfiguration ausgeführt wird und der äquivalent zu dem Initialisierungsmodus abläuft.

14. Verfahren nach einem der Ansprüche 11 bis 13,
**dadurch gekennzeichnet,**
dass die während des Initialisierungsmodus in die Patch-Adressspeicher (9) und Patch-Datenspeicher (10) geschriebenen Adressen bzw. Ersatzdaten über einen internen oder externen Speicher und/oder über eine interne oder externe Schnittstelle aus einem internen oder externen Speicher geladen werden.

15. Verfahren nach einem der Ansprüche 11 bis 14,
**dadurch gekennzeichnet**,
dass bei einer Übereinstimmung der Adressen im Patch-Betriebsmodus von der Ablaufsteuereinheit (15) ein Wartesignal (RDY) bereitgestellt wird, mittels dessen die zentrale Recheneinheit (2) für die Dauer eines Taktzyklus (CLK) in einen Wartezustand versetzt wird.

16. Verfahren nach einem der Ansprüche 11 bis 15,
**dadurch gekennzeichnet**,
dass bei einer Übereinstimmung der Adressen im Patch-Betriebsmodus von der Ablaufsteuereinheit (15) ein zweites Steuersignal (ROMEN) bereitgestellt wird, mittels dessen die ROM-Datenbusausgangstreiber deaktiviert werden.

17. Verfahren nach einem der Ansprüche 11 bis 16,
**dadurch gekennzeichnet,**
dass für den Fall, dass verschiedene Patch-Adressspeicher (9) dieselbe Adresse jedoch unterschiedliche Ersatzdaten in den entsprechenden Patch-Datenspeicher (10) aufweisen, über ein zweites Freigabesignal (13) der Ablaufsteuereinheit (15) ein Zugriffskonflikt auf den Datenbus (4) vermieden wird.

18. Vorrichtung oder Verfahren nach einem der vorherigen Ansprüche 1 bis 17,
**dadurch gekennzeichnet,** dass der Patch-Datenspeicher (10) ein Patch-Datenregister ist.

19. Vorrichtung oder Verfahren nach einem der vorherigen Ansprüche 1 bis 18,
**dadurch gekennzeichnet,** dass der Patch-Adressspeicher (9) ein Patch-Adressregister ist.

20. Vorrichtung oder Verfahren nach einem der vorherigen Ansprüche 1 bis 19,
**dadurch gekennzeichnet,** dass der Patch-Freigabespeicher (12) ein Patch-Freigaberegister ist.

21. Vorrichtung oder Verfahren nach einem der vorherigen Ansprüche 1 bis 20,
**dadurch gekennzeichnet,** dass der Adress- und Datenbus (3, 4) als interner Bus ausgebildet ist.

22. Vorrichtung oder Verfahren nach einem der vorherigen Ansprüche 1 bis 21,
**dadurch gekennzeichnet,** dass die Schaltungsanordnung als integrierte Schaltung vorgesehen ist, in der der Speicher (5) und das Patch-Speichermodul (7) monolithisch integriert sind.
